# EUROPEAN PATENT SPECIFICATION

(11) **EP 3 495 913 B1**
(45) Date of publication and mention of the grant of the patent: **21.07.2021**
(21) Application number: 17836208.3
(22) Date of filing: 02.06.2017
(51) Int. Cl.: H04L 12/10

(54) **POWER SUPPLY CONTROL FOR A COMMUNICATION NETWORK**
STEUERUNG DER STROMVERSORGUNG FÜR EIN KOMMUNIKATIONSNETZ
CONTRÔLE D'ALIMENTATION ÉLECTRIQUE POUR UN RÉSEAU DE COMMUNICATION

(30) Priority: 03.08.2016 CN 201610626791
(43) Date of publication of application: 12.06.2019
(73) Proprietor: ZTE Corporation, Shenzhen, Guangdong 518057 (CN)
(72) Inventor: GUO, Qiang, Shenzhen Guangdong 518057 (CN)
(74) Representative: Aipex B.V.
(86) International application number: PCT/CN2017/087012
(87) International publication number: WO 2018/024025

(56) References cited:
- WO-A1-2006/077569
- WO-A1-2016/026688
- CN-A- 102 983 982
- CN-A- 105 227 212
- CN-A- 105 763 337
- CN-A- 105 786 070
- CN-U- 204 498 138
- US-A1- 2016 164 687
- US-B1- 8 818 192

## Description

### TECHNICAL FIELD

The present application relates to, but is not limited to, the field of communication power supply and, in particular, relates to a power supply control method and device for a communication network.

### BACKGROUND

With the continuous development of communication network technology, the communication network not only implements the spread of information flow, but also travels the current to supply power to the electrical equipment in the network. In an example, the Ethernet is used for supplying power to electronic devices such as Internet telephony, wireless access points, surveillance cameras, and terminal switching devices in the network. In another example, the telephone network is used for supplying power to electronic devices such as telephones, ever-lasting lamps, and environmental monitoring devices in the telephone network. The communication network is used for supplying power to the devices, solving the problem of difficulty in power supply. The flexibility in use of the devices is improved, and the installation complexity and the use cost of the devices are reduced. The communication network is also used for remotely controlling the power-on or power-off of the devices.

For example, with the emergence of new technologies such as V2nd generation asymmetric digital subscriber line (VDSL2) and G.fast, the spectrum is expanded to implement asymmetrical transmission with net rates of 500 Mbps and 1 Gbps in uplink and downlink on copper twisted pairs. Since existing copper wire resources are used, the transformation risk and high cost are avoided. The new technologies can be introduced timely, greatly reducing the access cost and improving the access capability of the bandwidth. The access via copper wire will not only be used as a complement of the fiber to the home (FTTH) deployment environment, but also become a universally deployed independent network with broad application prospects.

Due to the existence of users of existing networks services such as the asymmetric digital subscriber line (VDSL) and VDSL2, the number of users of new services such as G.fast is increasing at an unpredictable speed. Old services and new services will inevitably overlap, merge, and mix with each other for networking. At the same time, the distinction between old and new services has been referred to in the relevant standards, but how to supply power is an important problem to be solved. In principle, VDSL and VDSL2 do not satisfy the conditions of reverse power feed (RPF), and must rely on the local alternating current (AC) power supply or other means such as photovoltaic cells, lithium batteries, lead-acid batteries. The new service, i.e., G.fast, in principle relies on RPF. The situation where old services and new services cross, merge and mix with each other for networking will inevitably appear. A single power supply is difficult to meet the actual application scenarios and customer requirements. The existence of hybrid power supply has certain inevitability.

Document WO2016/026688A1 discloses a network-side distribution point in a telecommunication network, which allows to deliver power to the distribution point at a rate determined only the services it is itself using, and without any need for coordination between the distribution point and the customer premises systems.

### SUMMARY

At present, there is no technical solution for hybrid power supply between reverse power supply and other power supply such as AC, photovoltaic cell, lithium battery, lead-acid battery power supply. Generally, there is only current equalization or ratio control for multi-path reverse power supply, or current equalization and load sharing for the output of AC power supply. When the old services and new services overlap, merge, and mix with each other for networking, the power supply can only be independently and exclusively performed in a certain mode, such as AC power supply or reverse power supply. It is not possible to perform multiple power supplies or perform different power supplies according to a certain ratio.

The present invention is defined in the appended independent claims to which reference should be made. Advantageous features are set out in the appended dependent claims.

### BRIEF DESCRIPTION OF DRAWINGS

FIG. 1 is a structural diagram of a power supply control device for a communication network according to an embodiment of the present invention;
FIG. 2 is another structural diagram of a power supply control device for a communication network according to an embodiment of the present invention;
FIG. 3 is a third structural diagram of a power supply control device for a communication network according to an embodiment of the present invention;
FIG. 4 is a fourth structural diagram of a power supply control device for a communication network according to an embodiment of the present invention;
FIG. 5 is a fifth structural diagram of a power supply control device for a communication network according to an embodiment of the present invention;
FIG. 6 is a sixth structural diagram of a power supply control device for a communication network according to an embodiment of the present invention;
FIG. 7 is a seventh structural diagram of a power supply control device for a communication network according to an embodiment of the present invention;
FIG. 8 is an eighth structural diagram of a power supply control device for a communication network according to an embodiment of the present invention;
FIG. 9 is a ninth structural diagram of a power supply control device for a communication network according to an embodiment of the present invention;
FIG. 10 is a tenth structural diagram of a power supply control device for a communication network according to an embodiment of the present invention;
FIG. 11 is a structural diagram of a photovoltaic power supply module in a power supply control device for a communication network according to an embodiment of the present invention;
FIG. 12 is another structural diagram of a photovoltaic power supply module in a power supply control device for a communication network according to an embodiment of the present invention;
FIG. 13 is a structural diagram of a battery power supply module in a power supply control device for a communication network according to an embodiment of the present invention;
FIG. 14 is another structural diagram of a battery power supply module in a power supply control device for a communication network according to an embodiment of the present invention;
FIG. 15 is a flowchart of a power supply control method for a communication network according to an embodiment of the present invention; and
FIG. 16 is another flowchart of a power supply control method for a communication network according to an embodiment of the present invention.

### DETAILED DESCRIPTION

The present application will be described hereinafter in detail through embodiments with reference to the drawings. It is to be noted that if not in collision, the embodiments and features therein in the present application may be combined with each other.

It is to be noted that the terms "first", "second" and the like in the description, claims and drawings of the present application are used to distinguish between similar objects and are not necessarily used to describe a particular order or sequence.

Embodiments of the present invention provide a power supply control device and method for a communication network. In the method, circuit data of power supply modules and a bus bar control module are detected, compared and analyzed to obtain required output circuit data of the power supply modules, output voltages of the power supply modules are adjusted according to the required output circuit data of power supply modules, and the output voltages of the power supply modules are converged to form a power supply bus bar for powering a lower-level power load. At the same time, a power supply ratio and magnitude of a certain power supply module may be adjusted through self-adjustment of each power supply module or according to requirements on power load of system. In such a way, the power supply state of each power supply module can be controlled; and the hybrid power supply and the integrated power supply can be implemented when services overlap, merge and mix with each other for networking, and the power supply mode can be switched and the power supply ratio between different power supply modes can be controlled and adjusted. For example, when a certain power supply terminal or a power supply module is powered down, the power supply mode may be switched to a normal power supply module, and the power supply ratio may be controlled and adjusted again. Different requirements may be met, thereby improving configurability, flexibility, reliability and safety of power supply and adapting to more application scenarios. Embodiments of the present invention will be detailed below with reference to the drawings. It is to be noted that if not in collision, the embodiments and features therein in the present application may be combined with each other. In the embodiments of the present invention, the power supply terminal refers to a source terminal for supplying power, and the power load refers to a load which ultimately uses power. The power supply module refers to a device which converts a voltage of the power supply terminal to a proper voltage which the power load needs. The power supply module is not only the reverse power supply module, the alternating current (AC) power supply module and the photovoltaic power supply module involved in the embodiments of the present invention, but also includes other types of modules capable of providing stable power, such as the high-voltage direct current (DC) power supply module and other types of battery power supply modules other than the photovoltaic cell. The communication network may be a power supply network for providing the direct current, such as the Ethernet and a telephone network.

The power supply control device for a communication network provided in the embodiments of the present invention may be an independent device, or may be integrated with the lower-level power load in the same device, or may be integrated with the lower-level power load in the same device in a mode of any combination of power supply modules.

The embodiments of the present invention will be described below in detail with reference to the drawings.

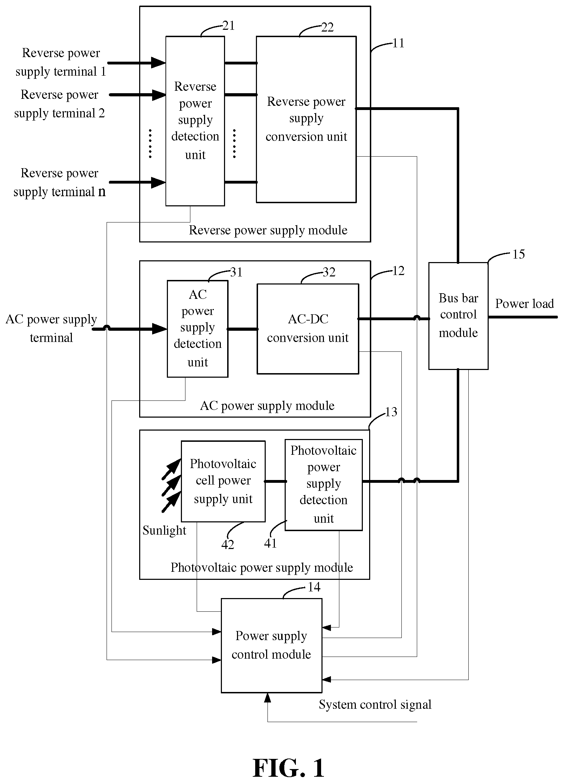

FIG. 1 is a structural diagram of a power supply control device for a communication network according to an embodiment of the present invention. As shown in FIG. 1, the device includes a reverse power supply module 11, an AC power supply module 12, a photovoltaic power supply module 13, a power supply control module 14 and a bus bar control module 15.

The reverse power supply module 11 includes a reverse power supply detection unit 21 and a reverse power supply conversion unit 22. The reverse power supply detection unit 21 is connected to a reverse power supply terminal at one side, and is connected to the reverse power supply conversion unit 22 at the other side. The reverse power supply detection unit 21 is configured to determine whether to receive a current from the power supply terminal, detect a power supply state of the reverse power supply terminal, and transmit reverse power supply state information, such as information of a path number, the current and the voltage for power supply, to the power supply control module 14. The reverse power supply conversion unit 22 is configured to convert voltages of N paths of reverse power supply terminals, provide a required DC voltage; receive a control signal of the power supply control module, and adjust an output voltage according to a parameter set by the reverse power supply conversion unit itself and/or the control signal from the power supply control module 14, thereby controlling a ratio and a magnitude of a power supply output of the reverse power supply module; and power the bus bar control module.

The AC power supply module 12 includes an AC power supply detection unit 31 and an AC-DC conversion unit 32. The AC power supply detection unit 31 is connected to an AC power supply terminal at one side, and the AC power supply detection unit 31 is connected to the AC-DC conversion unit 32 at the other side. The AC power supply detection unit 31 is configured to detect a power supply state of the AC power supply terminal, and transmit AC power supply state information and information of the voltage and the current to the power supply control module 14. The AC-DC conversion unit 32 is configured to convert an AC voltage of the AC power supply terminal to provide a required DC voltage; receive a control signal of the power supply control module 14, and adjust an output voltage according to a parameter set by the AC-DC conversion unit itself and/or the control signal from the power supply control module, thereby controlling a ratio and a magnitude of an AC power supply output; and power the bus bar control module. The photovoltaic power supply module 13 includes a photovoltaic power supply detection unit 41 and a photovoltaic cell power supply unit 42. The photovoltaic power supply detection unit 41 is connected to the photovoltaic cell power supply unit 42 at one side, and is connected to the bus bar control module 15 at the other side. The photovoltaic power supply detection unit 41 is configured to detect a power supply state of a photovoltaic cell, and transmit photovoltaic cell power supply state information and information of the voltage and the current to the power supply control module 14. The photovoltaic cell power supply unit 42 is configured to perform photovoltaic conversion to provide a required DC voltage; receive a control signal of the power supply control module 14, and adjust an output voltage according to a parameter set by the photovoltaic cell power supply unit itself and/or the control signal from the power supply control module, thereby controlling a ratio and a magnitude of a power supply output of the photovoltaic power supply module; and power the bus bar control module 15.

The power supply control module 14 is configured to receive power supply state information of the reverse power supply module 11, the AC power supply module 12, the photovoltaic power supply module 13 and the bus bar control module 15, calculate and analyze data of the power supply modules and data fed back by the bus bar control module 15, analyze and obtain required output circuit data of each power supply module, output control signals to respective power supply modules, and adjust the ratio and the magnitude of the power supply output of each power supply module. The power supply control module 14 may also be configured to receive a system control signal, parse the system control signal, and output a control signal to each power supply module, thereby controlling the ratio and the magnitude of the power supply output according to system setting.

The bus bar control module 15 is configured to detect power supply output information of each power supply module, converge outputs of paths of power supply, detect power supply output information of the power supply modules, transmit the power supply output information to the power supply control module 14 to form a power supply bus bar, for powering the lower-level power load.

In the above embodiment, the reverse power supply detection unit 21, the AC power supply detection unit 31 and the photovoltaic power supply detection unit 41 are connected in series in power supply lines. The reverse power supply detection unit 21, the AC power supply detection unit 31 and the photovoltaic power supply detection unit 41 transmit data information to the power supply control module 14. The power supply control module 14 transmits control information to the reverse power supply conversion unit 22, the AC-DC conversion unit 32 and the photovoltaic cell power supply unit 42.

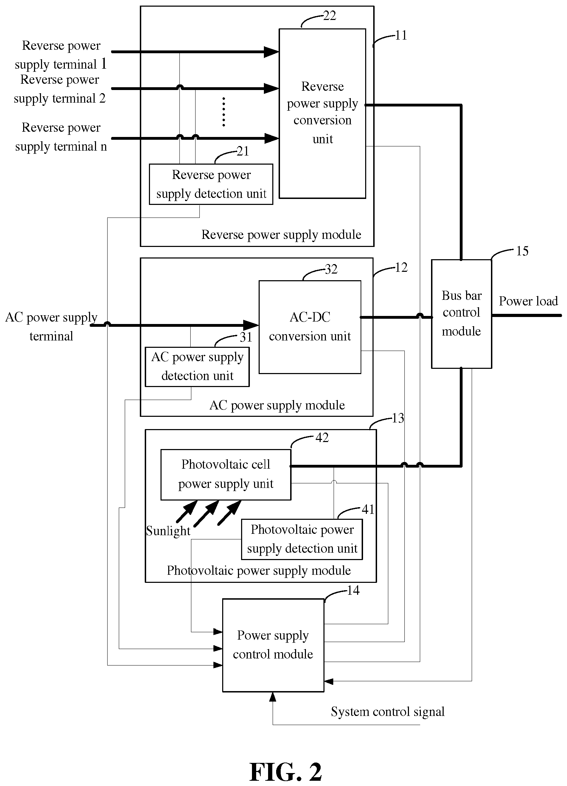

FIG. 2 is another structural diagram of a power supply control device for a communication network according to an embodiment of the present invention. As shown in FIG. 2, in the embodiment, the reverse power supply detection unit 21, the AC power supply detection unit 31 and the photovoltaic power supply detection unit 41 are connected in parallel in power supply lines. Except for the above-mentioned, the embodiment in FIG. 2 is consistent with the embodiment described in FIG. 1, and will not be repeated herein.

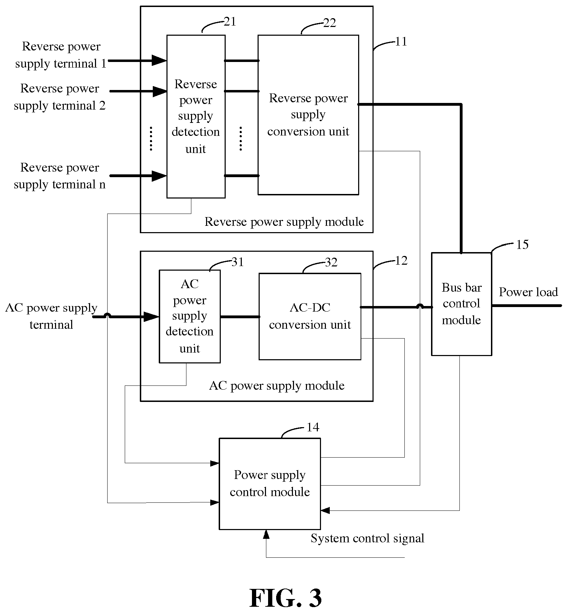

FIG. 3 is a third structural diagram of a power supply control device for a communication network according to an embodiment of the present invention. As shown in FIG. 3, in the embodiment, a combination of power supply modules includes the reverse power supply module 11 and the AC power supply module 12, and the reverse power supply detection unit 21 and the AC power supply detection unit 31 are connected in series in power supply lines. Except for the above-mentioned, the embodiment in FIG. 3 is consistent with the embodiment described in FIG. 1, and will not be repeated herein.

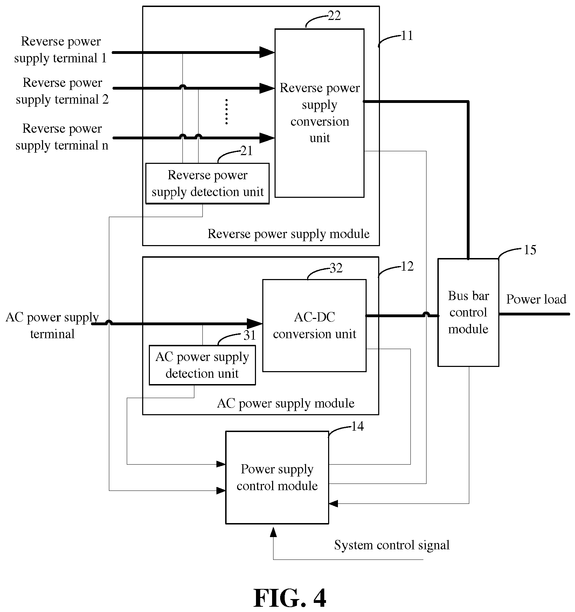

FIG. 4 is a fourth structural diagram of a power supply control device for a communication network according to an embodiment of the present invention. As shown in FIG. 4, in the embodiment, the combination of power supply modules includes the reverse power supply module 11 and the AC power supply module 12, and the reverse power supply detection unit 21 and the AC power supply detection unit 31 are connected in parallel in power supply lines. Except for the above-mentioned, the embodiment in FIG. 4 is consistent with the embodiment described in FIG. 3, and will not be repeated herein.

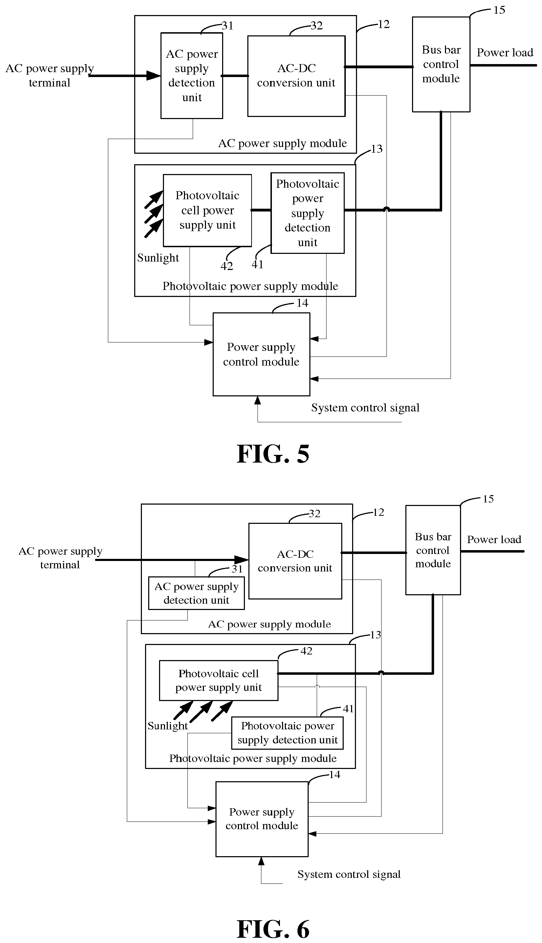

FIG. 5 is a fifth structural diagram of a power supply control device for a communication network according to an embodiment of the present invention. As shown in FIG. 5, in the embodiment, the combination of power supply modules includes the photovoltaic power supply module 13 and the AC power supply module 12, and the photovoltaic power supply detection unit 41 and the AC power supply detection unit 31 are connected in series in power supply lines. Except for the above-mentioned, the embodiment in FIG. 5 is consistent with the embodiment described in FIG. 1, and will not be repeated herein.

FIG. 6 is a sixth structural diagram of a power supply control device for a communication network according to an embodiment of the present invention. As shown in FIG. 6, in the embodiment, the combination of power supply modules includes the photovoltaic power supply module 13 and the AC power supply module 12, and the photovoltaic power supply detection unit 41 and the AC power supply detection unit 31 are connected in parallel in power supply lines. Except for the above-mentioned, the embodiment in FIG. 6 is consistent with the embodiment described in FIG. 5, and will not be repeated herein.

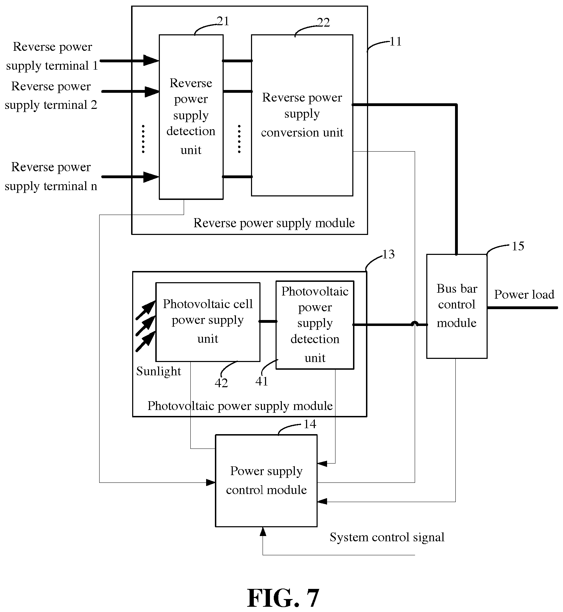

FIG. 7 is a seventh structural diagram of a power supply control device for a communication network according to an embodiment of the present invention. As shown in FIG. 7, in the embodiment, the combination of power supply modules includes the photovoltaic power supply module 13 and the reverse power supply module 11, and the photovoltaic power supply detection unit 41 and the reverse power supply detection unit 21 are connected in series in power supply lines. Except for the above-mentioned, the embodiment in FIG. 7 is consistent with the embodiment described in FIG. 1.

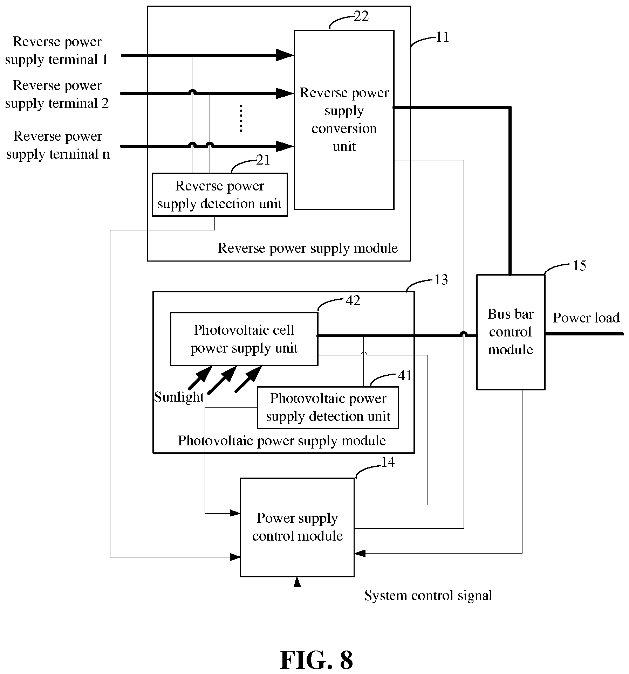

FIG. 8 is an eighth structural diagram of a power supply control device for a communication network according to an embodiment of the present invention. As shown in FIG. 8, in the embodiment, the combination of power supply modules includes the photovoltaic power supply module 13 and the reverse power supply module 11, and the photovoltaic power supply detection unit 41 and the reverse power supply detection unit 21 are connected in parallel in power supply lines. Except for the above-mentioned, the embodiment in FIG. 8 is consistent with the embodiment described in FIG. 7.

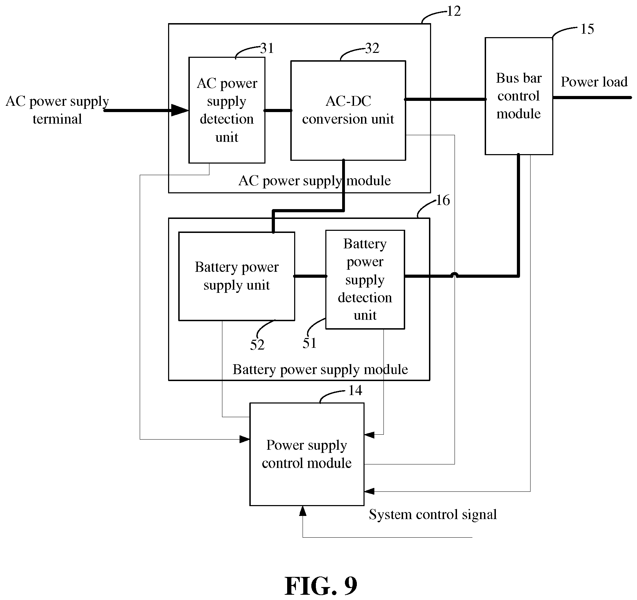

FIG. 9 is a ninth structural diagram of a power supply control device for a communication network according to an embodiment of the present invention. As shown in FIG. 9, the device includes the AC power supply module 12, the power supply control module 14, the bus bar control module 15 and a battery power supply module 16.

The battery power supply module 16 in the embodiment refers to battery power supply modules other than the photovoltaic cell. The battery power supply module 16 includes a battery power supply detection unit 51 and a battery power supply unit 52. The battery power supply detection unit 51 is connected to the battery power supply unit 52 at one side and is connected to the bus bar control module 15 at the other side. The battery power supply unit 52 is connected to the battery power supply detection unit 51 at one side, and is connected to the AC-DC conversion unit at the other side. The battery power supply detection unit 51 is configured to detect a power supply state of a battery, and transmit battery power supply state information and information of the voltage and the current to the power supply control module 14. The battery power supply unit 52 is configured to store part of the energy outputted by the AC-DC conversion unit to provides a required DC voltage; receive a control signal of the power supply control module 14, and adjust an output voltage according to a parameter set by the battery power supply unit itself and/or the control signal from the power supply control module, thereby controlling a ratio and a magnitude of a battery power supply output; and power the bus bar control module 15.

In the embodiment 9, the battery power supply detection unit 51 and the AC power supply detection unit 31 are connected in series in power supply lines. The battery power supply detection unit 51 and the AC power supply detection unit 31 transmit date information to the power supply control module 14. The power supply control module 14 transmits control information to the battery power supply unit 52 and the AC-DC conversion unit 32.

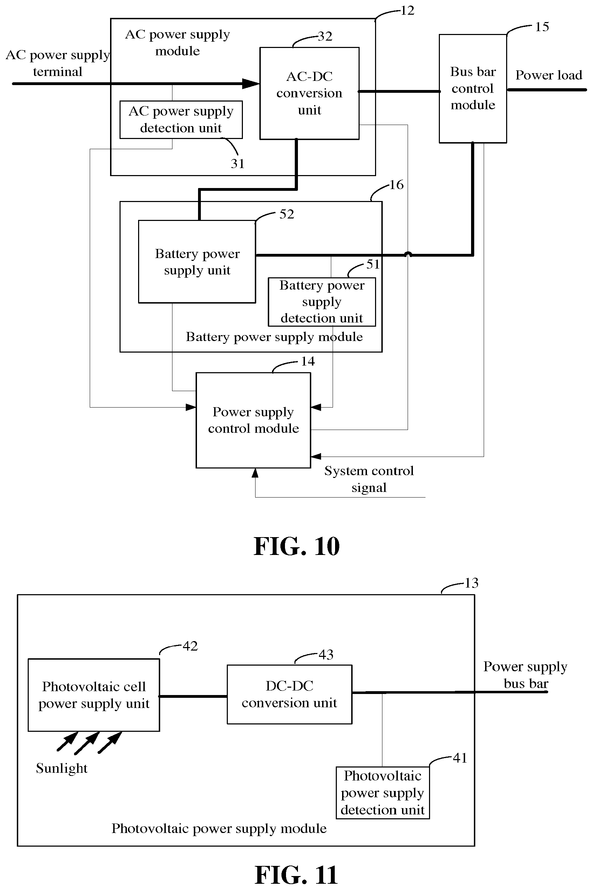

FIG. 10 is a tenth structural diagram of a power supply control device for a communication network according to an embodiment of the present invention. As shown in FIG. 10, in the embodiment, the power supply modules include the AC power supply module 12 and the battery power supply module 16, and the battery power supply detection unit 51 and the AC power supply detection unit 31 are connected in parallel in power supply lines. Except for the above-mentioned, the embodiment in FIG. 10 is consistent with the embodiment described in FIG. 9.

FIG. 11 is a structural diagram of a photovoltaic power supply module in a power supply control device for a communication network according to an embodiment of the present invention.

As shown in FIG. 11, the photovoltaic power supply module 13 includes the photovoltaic power supply detection unit 41, the photovoltaic cell power supply unit 42 and a DC-DC conversion unit 43. The DC-DC conversion unit 43 is configured to convert an output of the photovoltaic cell power supply unit 42 to implement voltage and current adjustment, thereby meeting requirements on a bus bar voltage.

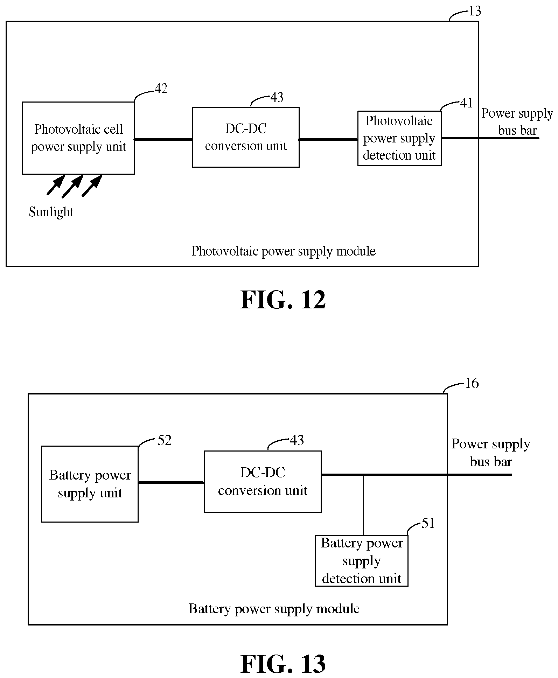

FIG. 12 is another structural diagram of a photovoltaic power supply module in a power supply control device for a communication network according to an embodiment of the present invention. As shown in FIG. 12, in the embodiment, the photovoltaic power supply module 13 includes the photovoltaic power supply detection unit 41, the photovoltaic cell power supply unit 42 and the DC-DC conversion unit 43. The photovoltaic power supply detection unit 41 is connected in series in power supply lines. Except for the above-mentioned, the embodiment in FIG. 12 is consistent with the embodiment described in FIG. 11.

FIG. 13 is a structural diagram of a battery power supply module in a power supply control device for a communication network according to an embodiment of the present invention. As shown in FIG. 13, the battery power supply module 16 includes the battery power supply detection unit 51, the battery power supply unit 52 and the DC-DC conversion unit 43. The DC-DC conversion unit 43 is configured to convert an output of the battery power supply unit 52 to implement voltage and current adjustment, thereby meeting requirements on the bus bar voltage.

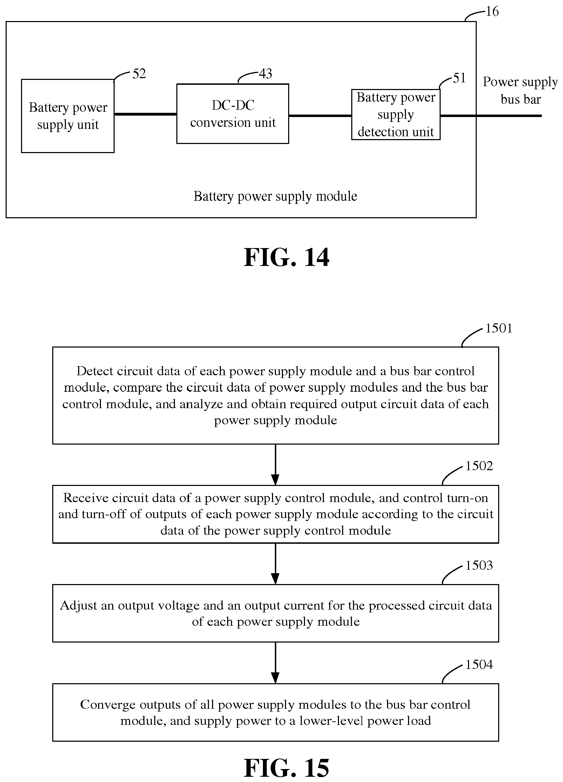

FIG. 14 is another structural diagram of a battery power supply module in a power supply control device for a communication network according to an embodiment of the present invention. As shown in FIG. 14, in the embodiment, the battery power supply module includes the battery power supply detection unit 51, the battery power supply unit 52 and the DC-DC conversion unit 43. The battery power supply detection unit 51 is connected in series in power supply lines. Except for the above-mentioned, the embodiment in FIG. 14 is consistent with the embodiment described in FIG. 13.

In the power supply control device for a communication network, the hybrid power supply and the integrated power supply can be implemented when services overlap, merge and mix with each other for networking, and the power supply mode can be switched and the power supply ratio between different power supply modes can be controlled and adjusted. For example, when a certain power supply terminal or a power supply module is powered down, the power supply mode may be switched to a normal power supply module, and the power supply ratio may be controlled and adjusted again. Different requirements may be met, thereby improving configurability, flexibility, reliability and safety of power supply and adapting to more application scenarios.

FIG. 15 is a flowchart of a power supply control method for a communication network according to an embodiment of the present invention. The method includes steps described below.

In step 1501, circuit data of each power supply module and a bus bar control module is detected, the circuit data of each power supply module and the bus bar control module are compared, and required output circuit data of each power supply module are analyzed and obtained.

In step 1502 (optional), circuit data of a power supply control module is received, and turn-on and turn-off of outputs of each power supply module are controlled according to the circuit data of the power supply control module.

In step 1503, an output voltage and an output current are adjusted for the processed circuit data of each power supply module.

In step 1504, outputs of all power supply modules are converged to the bus bar control module, and a lower-level power load is supplied with power.

First, a detection unit of each power supply module detects the respective circuit data of the power supply module. Second, the output circuit data is transmitted to the power supply control module, the detected output circuit data of power supply modules are compared and analyzed to obtain the required output voltage and output current. Then, the power supply control module processes circuit data of detection units to control turn-on and turn-off of the power supply of each path in the circuit, and each power supply module adjusts the output voltage and output current of each path in the circuit according to required output circuit data of each power supply module. Finally, the outputs of the power supply modules are converged to the bus bar control module and the lower-level power load is supplied with power.

In an embodiment, after the circuit data of the power supply modules are compared and analyzed to obtain the output circuit data of the respective power supply modules, the method further includes: calculating and processing the circuit data, and determining the output voltage and the output current of each power supply module, and turn-on and turn-off of a conversion function of each power supply module.

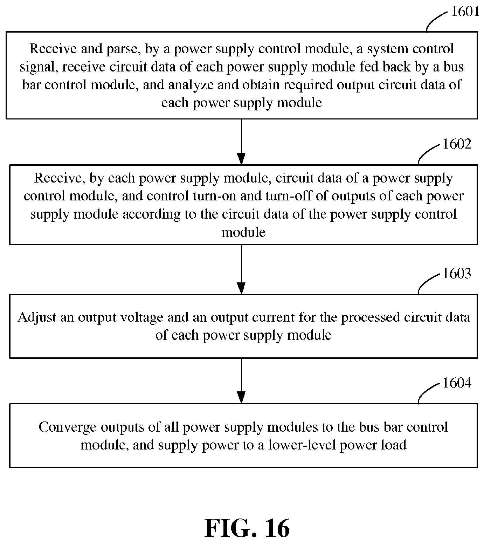

FIG. 16 is another flowchart of a power supply control method for a communication network according to an embodiment of the present invention. The method includes steps described below. In step 1601, the power supply control module receives and parses a system control signal, receives circuit data of each power supply module fed back by a bus bar control module, and analyzes and obtains output circuit data of each power supply module.

In step 1602 (optional), each power supply module receives circuit data of a power supply control module, and turn-on and turn-off of outputs of each power supply module are controlled according to the circuit data of the power supply control module.

In step 1603, an output voltage and an output current are adjusted for the processed circuit data of each power supply module.

In step 1604, outputs of all power supply modules are converged to the bus bar control module, and a lower-level power load is supplied with power.

The power supply control module receives and parses the system control signal, receives the circuit data of each power supply module fed back by the bus bar control module, and analyzes and obtains the required output circuit data of each power supply module according to the circuit data fed back by the bus bar control module. Then, the power supply control module processes the circuit data of each detection unit to control the turn-on and turn-off of each path in the circuit, and each power supply module adjusts the output voltage and output current of each path in the circuit according to required output circuit data of each power supply module. Finally, the outputs of the power supply modules are converged to the bus bar control module and the lower-level power load is supplied with power.

When the step 1501 and the step 1601 exist simultaneously, the step 1601 may have a higher priority than the step 1501, or the step 1501 may have a higher priority than the step 1601.

According to the circuit data outputted by the power supply control module, power supply control signals are transmitted to respective power supply modules, and the output voltage and the output current of each power supply module are controlled, thereby implementing the control of the ratio and magnitude of the power supply of each power supply module as well as the control of turn-on and turn-off of the power supply of each power supply module. In addition, the switching of power supply mode and the control and adjustment of the power supply ratio between different power supply modes are implemented, thereby improving configurability, flexibility, reliability and safety of power supply and adapting to more application scenarios.

In another aspect, embodiments of the present invention provide a computer-readable storage medium configured to store computer-executable instructions for executing the power supply control method for a communication network described above when executed by a processor. Through the description of implementation modes, it will be understood by those of ordinary skill in the art that all or part of the steps in the above-mentioned embodiments may be implemented using one or more computer programs. The computer programs may be stored in a computer-readable storage medium and executed on a corresponding hardware platform (e.g., system, device, apparatus or component). During the execution of these programs, one of or a combination of the steps in the above-mentioned method embodiments is implemented. All or part of the steps in the above-mentioned embodiments may also be implemented by using one or more integrated circuits. These steps may be made into integrated circuit modules separately, or part of these modules or steps may be made into a single integrated circuit module for implementation. In this way, the embodiments of the present invention are not limited to any specific combination of hardware and software.

The various devices/function modules/function units in the above-mentioned embodiments may be implemented on a general-purpose computing device. They may be concentrated on a single computing device or distributed over a network composed of multiple computing devices.

The various devices/function modules/function units in the above-mentioned embodiments are implemented by software function modules, and can be stored in a computer-readable storage medium when sold or used as stand-alone products. The above-mentioned computer-readable storage medium may be a read-only memory, a magnetic disk, an optical disk, or the like.

### INDUSTRIAL APPLICABILITY

In the embodiments of the present invention, circuit data of power supply modules are detected, calculated and analyzed, output voltages of the power supply modules are adjusted according to required ratios and magnitudes. As such, when services overlap, merge and mix with each other for networking, the hybrid power supply and integrated power supply are implemented, thereby improving configurability, flexibility, reliability and safety of power supply.

## Claims

1. A power supply control device for a communication network, the device comprising:
a reverse power supply module (11), which is configured to detect a power supply state of a reverse power supply terminal, and transmit reverse power supply state information to a power supply control module (14), wherein the reverse power supply terminal is used to supply power through reverse power feed, RPF;
a local power supply module (12, 13, 16), which is configured to detect a power supply state of a local power supply terminal, and transmit local power supply state information to the power supply control module (14), wherein the local power supply terminal is used to supply power through a local power source;
a bus bar control module (15), which is connected to a power supply output terminal of the reverse power supply module (11) and a power supply output terminal of the local power supply module (12, 13, 16), and is configured to detect power supply output information of the reverse power supply module (11) and the local power supply module (12, 13, 16), transmit the power supply output information to the power supply control module (14), and converge outputs of the reverse power supply module (11) and the local power supply module (12, 13, 16) to form a power supply bus bar for powering a lower-level power load;
the power supply control module (14), which is configured to output, according to the power supply output information received from the bus bar control module (15), the reverse power supply state information and the local power supply state information, a control signal to the reverse power supply module (11) and a control signal to the local power supply module (12, 13, 16), so as to adjust a magnitude of a power supply output of the reverse power supply module (11), a magnitude of a power supply output of the local power supply module (12, 13, 16) and a ratio between the power supply output of the reverse power supply module (11) and the power supply output of the local power supply module (12, 13, 16).

2. The device according to claim 1, wherein the reverse power supply module (11) comprises:
a reverse power supply detection unit (21), which is configured to detect circuit data of the power supply state of the reverse power supply terminal, and transmit the circuit data to the power supply control module (14); and
a reverse power supply conversion unit (22), which is configured to:
convert a voltage of the reverse power supply terminal to provide a required direct current, DC, voltage;
receive the control signal of the power supply control module (14), and adjust the ratio and the magnitude of the power supply output of the reverse power supply module (11) and
power the bus bar control module (15).

3. The device according to claim 1, wherein the local power supply module (12, 13, 16) comprises:
a local power supply detection unit (31, 41, 51), which is configured to detect circuit data of the power supply state of the local power supply terminal, and transmit the circuit data to the power supply control module (14); and
a local power supply conversion unit (32, 42, 52), which is configured to:
convert a voltage of the local power supply terminal to provide a required DC voltage,
receive the control signal of the power supply control module (14), and adjust the ratio and the magnitude of the power supply output of the local power supply module (12, 13, 16), and
power the bus bar control module (15).

4. The device according to claim 3, wherein the local power supply module (12, 13, 16) comprises one of or a combination of following power supply modules: an alternating current, AC, power supply module (12), a photovoltaic power supply module (13), a battery power supply module (16), and a high-voltage DC power supply module.

5. The device of any one of claims 1 to 4, wherein the power supply control module (14) is further configured to receive a system control signal, and output, according to the system control signal, the control signal to the reverse power supply module (11) and the control signal to the local power supply module (12, 13, 16), so as to control, according to system setting, the magnitude of the power supply output of the reverse power supply module (11), the magnitude of the power supply output of the local power supply module (12, 13, 16) and the ratio between the power supply output of the reverse power supply module (11) and the power supply output of the local power supply module (12, 13, 16), or to turn on/off at least one of the reverse power supply module (11) and the local power supply module (12, 13, 16).

6. A power supply control method for a communication network, applied on a power supply control device,
wherein the power supply control device comprises a reverse power supply module (11), a local power supply module (12, 13, 16), a bus bar control module (15) and a power supply control module (14),
the reverse power supply module (11) is connected to a reverse power supply terminal for power supply through reverse power feed, RPF, is connected to the bus bar control module (15) for providing power to the bus bar control module (15), and is connected to the power supply control module (14) for transmitting reverse power supply state information to the power supply control module (14) and receiving a control signal from the power supply control module (14);
the local power supply module (12, 13, 16) is connected to a local power supply terminal for power supply through a local power source, is connected to the bus bar control module (15) for providing power to the bus bar control module (15), and is connected to the power supply control module (14) for transmitting reverse power supply state information to the power supply control module (14) and receiving a control signal from the power supply control module (14);
the bus bar control module (15) is connected to the power supply control module (14) for transmitting power supply output information to the power supply control module (14) and receiving a control signal from the power supply control module (14);
wherein the power supply control method comprises:
detecting, by the reverse power supply module (11), circuit data of the reverse power supply module (11); detecting , by the local power supply module (12, 13, 16), circuit data of the local power supply module (12, 13, 16); and detecting, by the bus bar control module (15), circuit data of the bus bar control module (15);
comparing (1501), by the power supply control module (14), the circuit data of the reverse power supply module (11) and the circuit data of the local power supply module (12, 13, 16) with the circuit data of the bus bar control module (15), and calculating required circuit data of the reverse power supply module (11) and the local power supply module (12, 13, 16) according to a set magnitude of a power supply output of the reverse power supply module (11), a set magnitude of a power supply output of the local power supply module (12, 13, 16) and a set ratio between the power supply output of the reverse power supply module (11) and the power supply output of the local power supply module (12, 13, 16);
adjusting, by the reverse power supply module (11), output voltage of the reverse power supply module (11) according to the calculated circuit data of the reverse power supply module (11), and adjusting, by the local power supply module (12, 13, 16), output voltage of the local power supply module (12, 13, 16) according to the calculated circuit data of the local power supply module (12, 13, 16); and
converging, by the bus bar control module (15), outputs of the reverse power supply module (11) and the local power supply module (12, 13, 16) to form a power supply bus bar for powering a lower-level power load.

7. The method according to claim 6, wherein the local power supply module (12, 13, 16) comprises one of or a combination of following power supply modules: an alternating current, AC, power supply module (12), a photovoltaic power supply module (13), a battery power supply module (16), and a high-voltage direct current, DC, power supply module.

8. The method cording to claim 7, further comprising:
receiving a system control signal, and outputting, according to the system control signal, the control signal to the reverse power supply module (11) and the control signal to the local power supply module (12, 13, 16), so as to control, according to system setting, the magnitude of the power supply output of the reverse power supply module (11), the magnitude of the power supply output of the local power supply module (12, 13, 16) and the ratio between the power supply output of the reverse power supply module (11) and the power supply output of the local power supply module (12, 13, 16), or to turn on/off at least one of the reverse power supply module (11) and the local power supply module (12, 13, 16).

9. The method of any one of claim 6 to 8, wherein the circuit data comprises at least one of: a number of paths, a voltage and a current for power supply.

10. A computer-readable storage medium comprising instructions which, when executed by a computer, cause the computer to carry out all the steps of the method according to any one of claims 6 to 9.

## Patentansprüche

1. Vorrichtung für die Steuerung der Stromversorgung für ein Kommunikationsnetz, wobei die Vorrichtung Folgendes umfasst:
ein Modul (11) für umgekehrte Stromversorgung, welches dazu konfiguriert ist, einen Stromversorgungszustand eines Endgeräts für umgekehrte Stromversorgung zu erkennen und Informationen zum umgekehrten Stromversorgungszustand an ein Modul (14) für die Steuerung der Stromversorgung zu übertragen, wobei das Endgerät für umgekehrte Stromversorgung verwendet wird, um Strom durch eine umgekehrte Stromeinspeisung (RPF) bereitzustellen;
ein lokales Stromversorgungsmodul (12, 13, 16), welches dazu konfiguriert ist, einen Stromversorgungszustand eines lokalen Stromversorgungsendgeräts zu erkennen und Informationen zum lokalen Stromversorgungszustand an das Modul (14) für die Steuerung der Stromversorgung zu übertragen, wobei das lokale Stromversorgungsendgerät verwendet wird, um Strom durch eine lokale Stromquelle bereitzustellen;
ein Modul (15) für die Steuerung der Sammelschiene, welches mit einem Ausgabeendgerät der Stromversorgung des Moduls (11) für umgekehrte Stromversorgung und einem Ausgabeendgerät der Stromversorgung des lokalen Stromversorgungsmoduls (12, 13, 16) verbunden ist und dazu konfiguriert ist, Informationen der Stromversorgungsausgabe des Moduls (11) für umgekehrte Stromversorgung und des lokalen Stromversorgungsmoduls (12, 13, 16) zu erkennen, die Informationen der Stromversorgungsausgabe an das Modul (14) für die Steuerung der Stromversorgung zu übertragen und Ausgaben des Moduls (11) für umgekehrte Stromversorgung und des lokalen Stromversorgungsmoduls (12, 13, 16) zu konvergieren, um eine Sammelschiene der Stromversorgung zur Versorgung einer geringeren Stromlast auszubilden;
das Modul (14) für die Steuerung der Stromversorgung, welches dazu konfiguriert ist, die Informationen zum umgekehrten Stromversorgungszustand und die Informationen zum lokalen Stromversorgungszustand, ein Steuersignal an das Modul (11) für umgekehrte Stromversorgung und ein Steuersignal an das lokale Stromversorgungsmodul (12, 13, 16) gemäß den Informationen der Stromversorgungsausgabe, die von dem Modul (15) für die Steuerung der Sammelschiene empfangen wurden, auszugeben, um eine Größe einer Stromversorgungsausgabe des Moduls (11) für umgekehrte Stromversorgung, eine Größe der Stromversorgungsausgabe des lokalen Stromversorgungsmoduls (12, 13, 16) und ein Verhältnis zwischen der Stromversorgungsausgabe des Moduls (11) für umgekehrte Stromversorgung und der Stromversorgungsausgabe des lokalen Stromversorgungsmoduls (12, 13, 16) einzustellen.

2. Vorrichtung nach Anspruch 1, wobei das Modul (11) für umgekehrte Stromversorgung Folgendes umfasst:
eine Erkennungseinheit (21) für umgekehrte Stromversorgung, welche dazu konfiguriert ist, Schaltkreisdaten des Stromversorgungszustands des Endgeräts für umgekehrte Stromversorgung zu erkennen und Schaltkreisdaten an das Modul (14) für die Steuerung der Stromversorgung zu übertragen; und
eine Umwandlungseinheit (22) für umgekehrte Stromversorgung, welche zu Folgendem konfiguriert ist:
Umwandeln einer Spannung des Endgeräts für umgekehrte Stromversorgung, um eine erforderliche Gleichspannung (GS) bereitzustellen;
Empfangen des Steuersignals des Moduls (14) für die Steuerung der Stromversorgung und Einstellen des Verhältnisses und der Größe der Stromversorgungsausgabe des Moduls (11) für umgekehrte Stromversorgung und
Versorgen des Moduls (15) für die Steuerung der Sammelschiene.

3. Vorrichtung nach Anspruch 1, wobei das lokale Stromversorgungsmodul (12, 13, 16) Folgendes umfasst:
eine Erkennungseinheit (31, 41, 51) der lokalen Stromversorgung, welche dazu konfiguriert ist, Schaltkreisdaten des Stromversorgungszustands des lokalen Stromversorgungsendgeräts zu erkennen und die Schaltkreisdaten an das Modul (14) für die Steuerung der Stromversorgung zu übertragen; und
eine Umwandlungseinheit (32, 42, 52) der lokalen Stromversorgung, welche zu Folgendem konfiguriert ist:
Umwandeln einer Spannung des lokalen Stromversorgungsendgeräts, um eine erforderliche Gleichspannung bereitzustellen,
Empfangen des Steuersignals des Moduls (14) für die Steuerung der Stromversorgung und Einstellen des Verhältnisses und der Größe der Stromversorgungsausgabe des lokalen Stromversorgungsmoduls (12, 13, 16), und
Versorgen des Moduls (15) für die Steuerung der Sammelschiene.

4. Vorrichtung nach Anspruch 3, wobei das lokale Stromversorgungsmodul (12, 13, 16) eines von oder eine Kombination von folgenden Stromversorgungsmodulen umfasst: ein Modul (12) für die Wechselstromversorgung (WS-Versorgung), ein Modul (13) für die Photovoltaik-Stromversorgung, ein Modul (16) für die Batteriestromversorgung und ein Modul für die Hochspannungs-GS-Versorgung.

5. Vorrichtung nach einem der Ansprüche 1 bis 4, wobei das Modul (14) für die Steuerung der Stromversorgung ferner dazu konfiguriert ist, ein Systemsteuersignal zu empfangen und gemäß dem Systemsteuersignal das Steuersignal an das Modul (11) für umgekehrte Stromversorgung und das Steuersignal an das lokale Stromversorgungsmodul (12, 13, 16) auszugeben, um gemäß Systemeinstellung die Größe der Stromversorgungsausgabe des Moduls (11) für umgekehrte Stromversorgung, die Größe der Stromversorgungsausgabe des lokalen Stromversorgungsmoduls (12, 13, 16) und das Verhältnis zwischen der Stromversorgungsausgabe des Moduls (11) für umgekehrte Stromversorgung und der Stromversorgungsausgabe des lokalen Stromversorgungsmoduls (12, 13, 16) zu steuern oder mindestens eines von dem Modul (11) für umgekehrte Stromversorgung und dem lokalen Stromversorgungsmodul (12, 13, 16) ein-/auszuschalten.

6. Verfahren zur Steuerung der Stromversorgung für ein Kommunikationsnetz, das auf eine Vorrichtung für die Steuerung der Stromversorgung angewandt wird,
wobei die Vorrichtung für die Steuerung der Stromversorgung ein Modul (11) für umgekehrte Stromversorgung, ein lokales Stromversorgungsmodul (12, 13, 16), ein Modul (15) für die Steuerung der Sammelschiene und ein Modul (14) für die Steuerung der Stromversorgung umfasst,
das Modul (11) für umgekehrte Stromversorgung mit einem Endgerät für umgekehrte Stromversorgung zur Stromversorgung durch eine umgekehrte Stromeinspeisung (RPF) verbunden ist, mit dem Modul (15) für die Steuerung der Sammelschiene zur Bereitstellung von Strom an dem Modul (15) für die Steuerung der Sammelschiene verbunden ist und mit dem Modul (14) für die Steuerung der Stromversorgung zur Übertragung von Informationen zum umgekehrten Stromversorgungszustand an das Modul (14) für die Steuerung der Stromversorgung und zum Empfang eines Steuersignals von dem Modul (14) für die Steuerung der Stromversorgung verbunden ist;
das lokale Stromversorgungsmodul (12, 13, 16) mit einem lokalen Stromversorgungsendgerät zur Stromversorgung durch eine lokale Stromquelle verbunden ist, mit dem Modul (15) für die Steuerung der Sammelschiene zur Bereitstellung von Strom an dem Modul (15) für die Steuerung der Sammelschiene verbunden ist und mit dem Modul (14) für die Steuerung der Stromversorgung zur Übertragung von Informationen zum umgekehrten Stromversorgungszustand an das Modul (14) für die Steuerung der Stromversorgung und zum Empfang eines Steuersignals von dem Modul (14) für die Steuerung der Stromversorgung verbunden ist;
das Modul (15) für die Steuerung der Sammelschiene mit dem Modul (14) für die Steuerung der Stromversorgung zur Übertragung von Informationen zur Stromversorgungsausgabe an das Modul (14) für die Steuerung der Stromversorgung und zum Empfang eines Steuersignals von dem Modul (14) für die Steuerung der Stromversorgung verbunden ist;
wobei das Verfahren zur Steuerung der Stromversorgung Folgendes umfasst:
Erkennen von Schaltkreisdaten des Moduls (11) für umgekehrte Stromversorgung durch das Modul (11) für umgekehrte Stromversorgung; Erkennen von Schaltkreisdaten des lokalen Stromversorgungsmoduls (12, 13, 16) durch das lokale Stromversorgungsmodul (12, 13, 16); und Erkennen von Stromkreisdaten des Moduls (15) für die Steuerung der Sammelschiene durch das Modul (15) für die Steuerung der Sammelschiene;
Vergleichen (1501) der Stromkreisdaten des Moduls (11) für umgekehrte Stromversorgung und der Stromkreisdaten des lokalen Stromversorgungsmoduls (12, 13, 16) mit den Stromkreisdaten des Moduls (15) für die Steuerung der Sammelschiene durch das Modul (14) für die Steuerung der Stromversorgung und Berechnen erforderlicher Schaltkreisdaten des Moduls (11) für umgekehrte Stromversorgung und des lokalen Stromversorgungsmoduls (12, 13, 16) gemäß einer festgelegten Größe einer Stromversorgungsausgabe des Moduls (11) für umgekehrte Stromversorgung, einer festgelegten Größe einer Stromversorgungsausgabe des lokalen Stromversorgungsmoduls (12, 13, 16) und einem festgelegten Verhältnis zwischen der Stromversorgungsausgabe des Moduls (11) für umgekehrte Stromversorgung und der Stromversorgungsausgabe des lokalen Stromversorgungsmoduls (12, 13, 16);
Einstellen der Ausgabespannung des Moduls (11) für umgekehrte Stromversorgung durch das Modul (11) für umgekehrte Stromversorgung gemäß den berechneten Stromkreisdaten des Moduls (11) für umgekehrte Stromversorgung und Einstellen der Ausgabespannung des lokalen Stromversorgungsmoduls (12, 13, 16) durch das lokale Stromversorgungsmodul (12, 13, 16) gemäß den berechneten Stromkreisdaten des lokalen Stromversorgungsmoduls (12, 13, 16); und
Konvergieren von Ausgaben des Moduls (11) für umgekehrte Stromversorgung und des lokalen Stromversorgungsmoduls (12, 13, 16) durch das Modul (15) für die Steuerung der Sammelschiene, um eine Sammelschiene der Stromversorgung zur Versorgung einer geringeren Stromlast auszubilden.

7. Verfahren nach Anspruch 6, wobei das lokale Stromversorgungsmodul (12, 13, 16) eines von oder eine Kombination von folgenden Stromversorgungsmodulen umfasst: ein Modul (12) für die Wechselstromversorgung (WS-Versorgung), ein Modul (13) für die Photovoltaik-Stromversorgung, ein Modul (16) für die Batteriestromversorgung und ein Modul für die Hochspannungs-GS-Versorgung.

8. Verfahren nach Anspruch 7, ferner umfassend:
Empfangen eines Systemsteuersignals und Ausgeben des Steuersignals an das Modul (11) für umgekehrte Stromversorgung und des Steuersignals an das lokale Stromversorgungsmodul (12, 13, 16) gemäß dem Systemsteuersignal, um gemäß Systemeinstellung die Größe der Stromversorgungsausgabe des Moduls (11) für umgekehrte Stromversorgung, die Größe der Stromversorgungsausgabe des lokalen Stromversorgungsmoduls (12, 13, 16) und das Verhältnis zwischen der Stromversorgungsausgabe des Moduls (11) für umgekehrte Stromversorgung und der Stromversorgungsausgabe des lokalen Stromversorgungsmoduls (12, 13, 16) zu steuern oder mindestens eines von dem Modul (11) für umgekehrte Stromversorgung und dem lokalen Stromversorgungsmodul (12, 13, 16) ein-/auszuschalten.

9. Verfahren nach einem der Ansprüche 6 bis 8, wobei die Stromkreisdaten mindestens eines von Folgendem umfassen: eine Anzahl von Pfaden, eine Spannung und einen Strom zur Stromversorgung.

10. Computerlesbares Speichermedium, umfassend Anweisungen, welche bei Ausführung durch einen Computer herbeiführen, dass der Computer alle Schritte des Verfahrens nach einem der Ansprüche 6 bis 9 ausführt.

## Revendications

1. Dispositif de contrôle d'alimentation électrique pour un réseau de communication, le dispositif comprenant :
un module d'alimentation électrique inverse (11), qui est conçu pour détecter un état d'alimentation électrique d'une borne d'alimentation électrique inverse, et transmettre des informations d'état d'alimentation électrique inverse à un module de contrôle d'alimentation électrique (14), dans lequel la borne d'alimentation électrique inverse est utilisée pour fournir de l'électricité par le biais d'une distribution d'électricité inverse, RPF ;
un module d'alimentation électrique locale (12, 13, 16), qui est conçu pour détecter un état d'alimentation électrique d'une borne d'alimentation électrique locale, et transmettre des informations d'état d'alimentation électrique locale au module de contrôle d'alimentation électrique (14), dans lequel la borne d'alimentation électrique locale est utilisée pour fournir de l'électricité par le biais d'une source d'alimentation locale ;
un module de contrôle de barre bus (15), qui est connecté à une borne de sortie d'alimentation électrique du module d'alimentation électrique inverse (11) et à une borne de sortie d'alimentation électrique du module d'alimentation électrique locale (12, 13, 16), et est conçu pour détecter des informations de sortie d'alimentation électrique du module d'alimentation électrique inverse (11) et du module d'alimentation électrique locale (12, 13, 16), transmettre les informations de sortie d'alimentation électrique au module de contrôle d'alimentation électrique (14), et faire converger des sorties du module d'alimentation électrique inverse (11) et du module d'alimentation électrique locale (12, 13, 16) pour former une barre bus d'alimentation électrique pour alimenter une charge électrique de niveau inférieur ;
le module de contrôle d'alimentation électrique (14), qui est conçu pour produire en sortie, en fonction des informations de sortie d'alimentation électrique reçues depuis le module de contrôle de barre bus (15), les informations d'état d'alimentation électrique inverse et les informations d'état d'alimentation électrique locale, un signal de contrôle vers le module d'alimentation électrique inverse (11) et un signal de contrôle vers le module d'alimentation électrique locale (12, 13, 16), de sorte à ajuster une amplitude d'une sortie d'alimentation électrique du module d'alimentation électrique inverse (11), une amplitude d'une sortie d'alimentation électrique du module d'alimentation électrique locale (12, 13, 16) et un rapport entre la sortie d'alimentation électrique du module d'alimentation électrique inverse (11) et la sortie d'alimentation électrique du module d'alimentation électrique locale (12, 13, 16).

2. Dispositif selon la revendication 1, dans lequel le module d'alimentation électrique inverse (11) comprend :
une unité de détection d'alimentation électrique inverse (21), qui est conçue pour détecter des données de circuit de l'état d'alimentation électrique de la borne d'alimentation électrique inverse, et transmettre les données de circuit au module de contrôle d'alimentation électrique (14) ; et
une unité de conversion d'alimentation électrique inverse (22), qui est conçue pour :
convertir une tension de la borne d'alimentation électrique inverse pour obtenir une tension de courant continu, CC, voulue ;
recevoir le signal de contrôle du module de contrôle d'alimentation électrique (14), et ajuster le rapport et l'amplitude de la sortie d'alimentation électrique du module d'alimentation électrique inverse (11) et alimenter le module de contrôle de barre bus (15).

3. Dispositif selon la revendication 1, dans lequel le module d'alimentation électrique locale (12, 13, 16) comprend :
une unité de détection d'alimentation électrique locale (31, 41, 51), qui est conçue pour détecter des données de circuit de l'état d'alimentation électrique de la borne d'alimentation électrique locale, et transmettre les données de circuit au module de contrôle d'alimentation électrique (14) ; et
une unité de conversion d'alimentation électrique locale (32, 42, 52), qui est conçue pour :
convertir une tension de la borne d'alimentation électrique locale pour obtenir une tension CC voulue,
recevoir le signal de contrôle du module de contrôle d'alimentation électrique (14), et ajuster le rapport et l'amplitude de la sortie d'alimentation électrique du module d'alimentation électrique locale (12, 13, 16), et
alimenter le module de contrôle de barre bus (15).

4. Dispositif selon la revendication 3, dans lequel le module d'alimentation électrique locale (12, 13, 16) comprend l'un ou une combinaison des modules d'alimentation électrique suivants :
un module d'alimentation électrique en courant alternatif, CA, (12), un module d'alimentation électrique photovoltaïque (13), un module d'alimentation électrique par batterie (16) et un module d'alimentation électrique en CC haute tension.

5. Dispositif selon l'une quelconque des revendications 1 à 4, dans lequel le module de contrôle d'alimentation électrique (14) est conçu en outre pour recevoir un signal de contrôle de système, et produire en sortie, en fonction du signal de contrôle de système, le signal de contrôle vers le module d'alimentation électrique inverse (11) et le signal de contrôle vers le module d'alimentation électrique locale (12, 13, 16), de sorte à contrôler, en fonction du paramétrage de système, l'amplitude de la sortie d'alimentation électrique du module d'alimentation électrique locale (12, 13, 16) et le rapport entre la sortie d'alimentation électrique du module d'alimentation électrique inverse (11) et la sortie d'alimentation électrique du module d'alimentation électrique locale (12, 13, 16), ou d'allumer/éteindre au moins l'un du module d'alimentation électrique inverse (11) et du module d'alimentation électrique locale (12, 13, 16).

6. Procédé de contrôle d'alimentation électrique pour réseau de communication, appliqué sur un dispositif de contrôle d'alimentation électrique,
dans lequel le dispositif de contrôle d'alimentation électrique comprend un module d'alimentation électrique inverse (11), un module d'alimentation électrique locale (12, 13, 16), un module de contrôle de barre bus (15) et un module de contrôle d'alimentation électrique (14),
le module d'alimentation électrique inverse (11) est connecté à une borne d'alimentation électrique inverse pour alimentation électrique par le biais d'une distribution d'électricité inverse, RPF, est connecté au module de contrôle de barre bus (15) pour fournir de l'électricité au module de contrôle de barre bus (15), et est connecté au module de contrôle d'alimentation électrique (14) pour transmettre des informations d'état d'alimentation électrique inverse au module de contrôle d'alimentation électrique (14) et recevoir un signal de contrôle du module de contrôle d'alimentation électrique (14) ;
le module d'alimentation électrique locale (12, 13, 16) est connecté à une borne d'alimentation électrique locale pour alimentation électrique par le biais d'une source d'alimentation locale, est connecté au module de contrôle de barre bus (15) pour fournir de l'électricité au module de contrôle de barre bus (15), et est connecté au module de contrôle d'alimentation électrique (14) pour transmettre des informations d'état d'alimentation électrique inverse au module de contrôle d'alimentation électrique (14) et recevoir un signal de contrôle du module de contrôle d'alimentation électrique (14) ;
le module de contrôle de barre bus (15) est connecté au module de contrôle d'alimentation électrique (14) pour transmettre des informations de sortie d'alimentation électrique au module de contrôle d'alimentation électrique (14) et recevoir un signal de contrôle du module de contrôle d'alimentation électrique (14) ;
dans lequel le procédé de contrôle d'alimentation électrique comprend :
la détection, par le module d'alimentation électrique inverse (11), de données de circuit du module d'alimentation électrique inverse (11) ; la détection, par le module d'alimentation électrique locale (12, 13, 16), de données de circuit du module d'alimentation électrique locale (12, 13, 16) ; et la détection, par le module de contrôle de barre bus (15), de données de circuit du module de contrôle de barre bus (15) ;
la comparaison (1501), par le module de contrôle d'alimentation électrique (14), des données de circuit du module d'alimentation électrique inverse (11) et des données de circuit du module d'alimentation électrique locale (12, 13, 16) avec les données de circuit du module de contrôle de barre bus (15), et le calcul de données de circuit voulues du module d'alimentation électrique inverse (11) et du module d'alimentation électrique locale (12, 13, 16) en fonction d'une amplitude paramétrée d'une sortie d'alimentation électrique du module d'alimentation électrique inverse (11), d'une amplitude paramétrée d'une sortie d'alimentation électrique du module d'alimentation électrique locale (12, 13, 16) et d'un rapport paramétré entre la sortie d'alimentation électrique du module d'alimentation électrique inverse (11) et de la sortie d'alimentation électrique du module d'alimentation électrique locale (12, 13, 16.) ;
l'ajustement, par le module d'alimentation électrique inverse (11) de la tension de sortie du module d'alimentation électrique inverse (11) en fonction des données de circuit calculées du module d'alimentation électrique inverse (11), et l'ajustement, par le module d'alimentation électrique locale (12, 13, 16), d'une tension de sortie du module d'alimentation électrique locale (12, 13, 16) en fonction des données de circuit calculées du module d'alimentation électrique locale (12, 13, 16) ; et
la convergence, par le module de contrôle de barre bus (15), de sorties du module d'alimentation électrique inverse (11) et du module d'alimentation électrique locale (12, 13, 16) pour former une barre bus d'alimentation électrique pour alimenter une charge électrique de niveau inférieur.

7. Procédé selon la revendication 6, dans lequel le module d'alimentation électrique locale (12, 13, 16) comprend l'un ou une combinaison des modules d'alimentation électrique suivants :
un module d'alimentation électrique en courant alternatif, CA, (12), un module d'alimentation électrique photovoltaïque (13), un module d'alimentation électrique par batterie (16), et un module d'alimentation électrique en CC haute tension.

8. Procédé selon la revendication 7, comprenant en outre :
la réception d'un signal de contrôle de système, et la sortie, en fonction du signal de contrôle de système, du signal de contrôle vers le module d'alimentation électrique inverse (11) et du signal de contrôle vers le module d'alimentation électrique locale (12, 13, 16), de sorte à contrôler, en fonction du paramétrage de système, l'amplitude de la sortie d'alimentation électrique du module d'alimentation électrique inverse (11), l'amplitude de la sortie d'alimentation électrique du module d'alimentation électrique locale (12, 13, 16) et le rapport entre la sortie d'alimentation électrique du module d'alimentation électrique inverse (11) et la sortie d'alimentation électrique du module d'alimentation électrique locale (12, 13, 16), ou d'allumer/éteindre au moins l'un du module d'alimentation électrique inverse (11) et du module d'alimentation électrique locale (12, 13, 16).

9. Procédé selon l'une quelconque des revendications 6 à 8, dans lequel les données de circuit comprennent au moins l'un parmi :
un nombre de chemins, une tension et un courant pour alimentation électrique.

10. Support de stockage lisible par ordinateur comprenant des instructions qui, lorsqu'elles sont exécutées par un ordinateur, amènent l'ordinateur à réaliser toutes les étapes du procédé selon l'une quelconque des revendications 6 à 9.
